(19) Europäisches Patentamt
European Patent Office
Office européen des brevets

(11) **EP 3 540 376 B1**

(12) **EUROPEAN PATENT SPECIFICATION**

(45) Date of publication and mention
of the grant of the patent:
**28.04.2021 Bulletin 2021/17**

(21) Application number: **17876759.6**

(22) Date of filing: **12.07.2017**

(51) Int Cl.:
***G01C 25/00*** *(2006.01)*     ***G01C 21/12*** *(2006.01)*

(86) International application number:
**PCT/CN2017/092650**

(87) International publication number:
**WO 2018/099089 (07.06.2018 Gazette 2018/23)**

(54) **METHOD AND DEVICE FOR RECOGNIZING STATIONARY STATE**

VERFAHREN UND VORRICHTUNG ZUR ERKENNUNG EINES STATIONÄREN ZUSTANDES

PROCÉDÉ ET DISPOSITIF DE RECONNAISSANCE D'ÉTAT STATIONNAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.11.2016 CN 201611088239**

(43) Date of publication of application:
**18.09.2019 Bulletin 2019/38**

(73) Proprietor: **Huawei Technologies Co., Ltd.
Longgang District
Shenzhen, Guangdong 518129 (CN)**

(72) Inventors:
• **ZHANG, Quan
Wuhan, Hubei 430079 (CN)**
• **NIU, Xiaoji
Wuhan, Hubei 430079 (CN)**
• **FU, Liding
Shenzhen, Guangdong 518129 (CN)**

(74) Representative: **Maiwald Patent- und
Rechtsanwaltsgesellschaft mbH
Elisenhof
Elisenstraße 3
80335 München (DE)**

(56) References cited:
CN-A- 101 814 112    CN-A- 102 355 530
CN-A- 103 499 354    CN-A- 103 630 147
CN-A- 103 701 991    CN-A- 104 504 066
CN-A- 105 534 527    CN-A- 105 894 329
CN-A- 106 108 913    US-A1- 2010 121 601
US-A1- 2012 053 914

• **JONAS CALLMER ET AL: "Probabilistic stand
still detection using foot mounted IMU",
INFORMATION FUSION (FUSION), 2010 13TH
CONFERENCE ON, IEEE, 26 July 2010
(2010-07-26), pages 1-7, XP031913414, ISBN:
978-0-9824438-1-1**
• **ISAAC SKOG ET AL: "Zero-Velocity Detection-An
Algorithm Evaluation", IEEE TRANSACTIONS ON
BIOMEDICAL ENGINEERING, IEEE SERVICE
CENTER, PISCATAWAY, NJ, USA, vol. 57, no. 11,
1 November 2010 (2010-11-01), pages 2657-2666,
XP011327074, ISSN: 0018-9294, DOI:
10.1109/TBME.2010.2060723**
• **K. KEUNECKE ET AL: "Motion State Prediction
by Unaided Inertial Micro-Machined
Accelerometers", AMA CONFERENCES 2013 -
SENSOR 2013, OPTO 2013, IRS 2013, 1 January
2013 (2013-01-01), XP055638745, DOI:
10.5162/sensor2013/B8.1 ISBN:
978-3-9813484-3-9**

## Description

### TECHNICAL FIELD

This application relates to the field of inertial navigation technologies, and in particular, to a static state determining method and apparatus.

### BACKGROUND

With maturity and development of micro-electro-mechanical systems (Micro-Electromechanical System, MEMS) technologies, inertial navigation technologies have a rapidly increasing application range, and currently, are widely applied to vehicle navigation and pedestrian navigation. An inertial navigation system (Inertial Navigation System, INS) is a dead reckoning system, and includes an inertial measurement unit (Inertial Measurement Unit, IMU) and an inertial navigation mechanization algorithm. However, due to a sensor error in the INS, an INS error becomes larger as time increases. To resolve the problem that the INS error becomes larger as the time increases, a zero velocity update (Zero Velocity Update, ZUPT) means is used as a currently used solution to reduce the INS error. For example, a disclosure for reducing the INS error can be found in the article "Probabilistic stand still detection using foot mounted IMU" of Jonas Callmer, et al, Information Fusion, 2010, 13th Conference, IEEE, 26 July 2010, pages 1 to 7, XP031913414.

Zero velocity update, or referred to as ZUPT detection, is to determine a time period in which a carrier is in a static state, based on data measured by the IMU. A zero velocity update detection method in the prior art is a threshold method. Appropriate thresholds are preset for collected data measured by the IMU, when the INS is in a moving state and when the INS is in a static state. In a process of using the INS, the data measured by the IMU or new data that is obtained through projection transformation performed on the data is compared with the thresholds. When the data measured by the IMU or the new data is less than or equal to the thresholds, a time period in which the INS is in the static state is determined.

In conclusion, according to the detection method in the prior art, accuracy of determining the static state of the INS is low. How to improve the accuracy of determining the static state of the INS is a problem to be resolved at present.

### SUMMARY

Embodiments of the present invention provide a static state determining method and apparatus, to improve accuracy of determining a static state of a target vehicle, a device, or an apparatus.

According to a first aspect, an embodiment of the present invention provides a static state determining method, including:

obtaining, by an inertial navigation system, first running data that is measured by an inertial measurement unit IMU in first specified duration, where the first running data includes running data of each of N axes that is measured by the IMU in the first specified duration, and N is a positive integer greater than or equal to 1, and preferably, the first specified duration is 1 second and N is 6; determining, by the inertial navigation system, a first standard deviation corresponding to the running data of each axis in the first specified duration, that is, determining N first standard deviations; matching, by the inertial navigation system, the N first standard deviations with a prestored database, to determine N second standard deviations the same as the N first standard deviations; and determining, by the inertial navigation system in the prestored database, first information corresponding to each of the N second standard deviations, where the first information includes a first probability that the second standard deviation is static, and a weight corresponding to the second standard deviation. Specifically, the N first standard deviations are from the N axes respectively, and the second standard deviations included in the database are also from the N axes. The first information includes the first probability that the second standard deviation is static, to be specific, the first probability that an axis corresponding to the second standard deviation is static. The weight corresponding to the second standard deviation is a weight of the axis corresponding to the second standard deviation. The inertial navigation system multiplies the first probability in each of the N pieces of first information by the corresponding weight, and adds N values obtained through the multiplication, where a value obtained through the addition is determined as a second probability that the N first standard deviations are static; and when the second probability is greater than or equal to the static probability threshold, the inertial navigation system determines that a device in which the inertial navigation system is located is in a static state in the first specified duration; or when the second probability is less than the static probability threshold, determines that a device in which the inertial navigation system is located is in a moving state in the first specified duration.

In this embodiment of the present invention, the inertial navigation system measures, by using the IMU, running data of N axes in the first specified duration; calculates first standard deviations corresponding to the running data of the N axes; queries the database for the calculated N first standard deviations, to determine the N second standard deviations the same as the N first standard deviations; determines, in the database, the first probabilities corresponding to the N second standard deviations respectively, and the weights corresponding to axes on which the N second standard deviations are located; determines, based on the N determined first probabilities and weights corresponding to the N axes, the second probability that the device in which the inertial navigation system is located is static in the first specified duration; compares the second probability with the static probability threshold; and when the second probability is greater than or equal to the static probability threshold, determines that the device in which the inertial navigation system is located is static in the first specified duration. According to the foregoing method, accuracy of determining a static state is improved.

A correspondence between the second standard deviation and the weight of the axis on which the second standard deviation is located is formed through the following process: determining, by the inertial navigation system, sample data, measured by the IMU in second specified duration, of any axis; determining, by the inertial navigation system, sample data corresponding to each first specified duration in the second specified duration as static data or dynamic data, determining a static standard deviation based on the static data, and determining a dynamic standard deviation based on the dynamic data, where a value of the first specified duration in the second specified duration is determined in a form of a sliding window; grouping a plurality of determined static standard deviations based on first specified threshold ranges, and determining a quantity of static standard deviations in each first specified threshold range; and dividing the first threshold specified range into a plurality of groups, where values of fixed intervals are grouped into one group to obtain a static standard deviation distribution histogram; and grouping a plurality of determined dynamic sample standard-deviations based on second specified threshold ranges, determining a quantity of dynamic sample standard-deviations in each second specified threshold range; and dividing the first threshold specified range into a plurality of groups, where values of fixed intervals are grouped into one group to obtain a dynamic standard deviation distribution histogram; separately performing curve fitting on the histogram of the static standard deviations and the distribution histogram of the dynamic standard deviations, and normalizing curves obtained through the fitting, to determine a static standard deviation curve and a dynamic standard deviation curve; placing the static standard deviation curve and the dynamic standard deviation curve in a same coordinate system, and determining an area of an intersecting part of the static standard deviation curve and the dynamic standard deviation curve; and determining a reciprocal of the area of the intersecting part as a weight of the plurality of static standard deviations and the plurality of dynamic sample standard-deviations corresponding to any axis. The weights of the N axes are determined in the foregoing calculation manner.

A correspondence between the second standard deviation and the first probability is formed through the following process: placing the static standard deviation curve and the dynamic standard deviation curve in a same coordinate system, where when the area of the intersecting part of the static standard deviation curve and the dynamic standard deviation curve is determined, each of the static standard deviation curve and the dynamic standard deviation curve has two intersection points with a horizontal axis of the coordinate system; in the two intersection points, an intersection point a has a shorter distance to an origin of the coordinate system, and an intersection point b has a longer distance to the origin of the coordinate system; and an intersection point of the static standard deviation curve and the dynamic standard deviation curve is an intersection point c; and when the second standard deviation is a value less than or equal to the intersection point a, a probability that the second standard deviation is static is a corresponding probability value of the second standard deviation on the static standard deviation curve; when the second data is a value greater than or equal to the intersection point b, a probability that the second standard deviation is static is 0; and when the second data is a value greater than the point a and less than the point b, a probability that the second standard deviation is static is: a ratio of the corresponding probability value of the second standard deviation on the static standard deviation curve to a sum of the corresponding probability value of the second standard deviation on the static standard deviation curve and a corresponding probability value of the second standard deviation on the dynamic standard deviation curve.

According to a second aspect, an embodiment of the present invention provides a static state determining apparatus, including:

an obtaining module, configured to obtain first running data that is measured by an inertial measurement unit IMU in first specified duration, where the first running data includes running data of each of N axes that is measured by the IMU in the first specified duration, and N is a positive integer greater than or equal to 1; a determining module, configured to determine N first standard deviations of the first running data; a matching module, configured to match the N first standard deviations with a prestored database, to determine N second standard deviations the same as the N first standard deviations; a searching module, configured to determine, in the prestored database, first information corresponding to each of the N second standard deviations, where the first information includes a first probability that the second standard deviation is static, and a weight corresponding to the second standard deviation; a processing module, configured to: multiply the first probability in each of the N pieces of first information by the corresponding weight, and add N values obtained through the multiplication, where a value obtained through the addition is determined as a second probability that the N first standard deviations are static; and a judgment module, configured to: when the second probability is greater than or equal to the static probability threshold, determine that a device in which the inertial navigation system is located is in a static state in the first specified duration.

In this embodiment of the present invention, an inertial navigation system measures, by using the IMU, running data of N axes in the first specified duration; calculates first standard deviations corresponding to the running data of the N axes; queries the database for the calculated N first standard deviations, to determine the N second standard deviations the same as the N first standard deviations; determines, in the database, the first probabilities corresponding to the N second standard deviations respectively, and weights corresponding to axes on which the N second standard deviations are located; determines, based on the N determined first probabilities and weights corresponding to the N axes, the second probability that the device in which the inertial navigation system is located is static in the first specified duration; compares the second probability with the static probability threshold; and when the second probability is greater than or equal to the static probability threshold, determines that the device in which the inertial navigation system is located is static in the first specified duration. According to the foregoing method, accuracy of determining a static state is improved.

A correspondence between the second standard deviation and the weight is formed through the following process: determining static data and dynamic data, measured by the IMU in second specified duration, of any axis; determining, in the second specified duration, static data corresponding to each first specified duration and dynamic sample data corresponding to the first specified duration, determining a static standard deviation based on the static data corresponding to the first specified duration, and determining a dynamic sample standard-deviation based on the dynamic sample data corresponding to the first specified duration; grouping a plurality of determined static standard deviations based on first specified threshold ranges, and determining a quantity of static standard deviations in each first specified threshold range, to obtain a distribution histogram of the static standard deviations; and grouping a plurality of determined dynamic sample standard-deviations based on second specified threshold ranges, and determining a quantity of dynamic standard deviations in each second specified threshold range, to obtain a distribution histogram of the dynamic standard deviations; separately performing curve fitting on the histogram of the static standard deviations and the distribution histogram of the dynamic standard deviations, and normalizing curves obtained through the fitting, to determine a static standard deviation curve and a dynamic standard deviation curve; placing the static standard deviation curve and the dynamic standard deviation curve in a same coordinate system, and determining an area of an intersecting part of the static standard deviation curve and the dynamic standard deviation curve; and determining a reciprocal of the area of the intersecting part as a weight of the plurality of static standard deviations and the plurality of dynamic standard deviations corresponding to any axis.

A correspondence between the second standard deviation and the first probability is formed through the following process: placing the static standard deviation curve and the dynamic standard deviation curve in a same coordinate system, where when the area of the intersecting part of the static standard deviation curve and the dynamic standard deviation curve is determined, each of the static standard deviation curve and the dynamic standard deviation curve has two intersection points with a horizontal axis of the coordinate system; in the two intersection points, an intersection point a has a shorter distance to an origin of the coordinate system, and an intersection point b has a longer distance to the origin of the coordinate system; and an intersection point of the static standard deviation curve and the dynamic standard deviation curve is an intersection point c; and when the second standard deviation is a value less than or equal to the intersection point a, a probability that the second standard deviation is static is a corresponding probability value of the second standard deviation on the static standard deviation curve; when the second data is a value greater than or equal to the intersection point b, a probability that the second standard deviation is static is 0; and when the second data is a value greater than the point a and less than the point b, a probability that the second standard deviation is static is: a ratio of the corresponding probability value of the second standard deviation on the static standard deviation curve to a sum of the corresponding probability value of the second standard deviation on the static standard deviation curve and a corresponding probability value of the second standard deviation on the dynamic standard deviation curve.

In a possible design, N is 6.

According to a third aspect, there is provided a static state determining apparatus, including a processor and a memory connected to the processor, where

the memory is configured to store program code executed by the processor; and

the processor is configured to execute the program code stored in the memory to perform the following process:

obtaining first running data that is measured by an inertial measurement unit IMU in first specified duration, where the first running data includes running data of each of N axes that is measured by the IMU in the first specified duration, and N is a positive integer greater than or equal to 1; determining N first standard deviations of the first running data; matching the N first standard deviations with a prestored database, to determine N second standard deviations the same as the N first standard deviations; determining, in the prestored database, first information corresponding to each of the N second standard deviations, where the first information includes a first probability that the second standard deviation is static, and a weight corresponding to the second standard deviation; multiplying the first probability in each of the N pieces of first information by the corresponding weight, and adding N values obtained through the multiplication, where a value obtained through the addition is determined as a second probability that the N first standard deviations are static; and when the second probability is greater than or equal to the static probability threshold, determining that a device in which the inertial navigation system is located is in a static state in the first specified duration.

In the embodiments of the present invention, an inertial navigation system measures, by using the IMU, running data of N axes in the first specified duration; calculates first standard deviations corresponding to the running data of the N axes; queries the database for the calculated N first standard deviations, to determine the N second standard deviations the same as the N first standard deviations; determines, in the database, the first probabilities corresponding to the N second standard deviations respectively, and the weights corresponding to axes on which the N second standard deviations are located; determines, based on the N determined first probabilities and weights corresponding to the N axes, the second probability that the device in which the inertial navigation system is located is static in the first specified duration; compares the second probability with the static probability threshold; and when the second probability is greater than or equal to the static probability threshold, determines that the device in which the inertial navigation system is located is static in the first specified duration. According to the foregoing method, accuracy of determining a static state is improved.

**BRIEF DESCRIPTION OF DRAWINGS**

FIG. 1 shows a static standard deviation curve and a static standard deviation curve according to an embodiment of the present invention;

FIG. 2 is a schematic flowchart of determining the static standard deviation curve and the static standard deviation curve in FIG. 1 according to an embodiment of the present invention;

FIG. 3 shows original data of an IMU according to an embodiment of the present invention;

FIG. 4 shows static standard deviation curves and static standard deviation curves along axes according to an embodiment of the present invention;

FIG. 5 shows curves of probabilities that standard deviations of overlapping parts of static standard deviation curves and dynamic standard deviation curves along axes according to an embodiment of the present invention;

FIG. 6 is a schematic flowchart of a static state determining method according to an embodiment of the present invention;

FIG. 7 is a schematic structural diagram of a static state determining apparatus according to an embodiment of the present invention; and

FIG. 8 is a schematic structural diagram of hardware of a static state determining apparatus according to an embodiment of the present invention.

**DESCRIPTION OF EMBODIMENTS**

The following further describes embodiments of the present invention in detail with reference to the accompanying drawings in this specification. It should be understood that the embodiments described herein are merely used to explain the present invention but are not intended to limit the present invention.

An inertial navigation system INS is a dead reckoning system, and includes an inertial measurement unit IMU and an inertial navigation mechanization algorithm. However, due to a sensor error in the INS, an INS error becomes larger as time increases. To resolve the problem that the INS error becomes larger as the time increases and to reduce the INS error, an embodiment of the present invention provides a static state determining method, to improve accuracy of determining a static state.

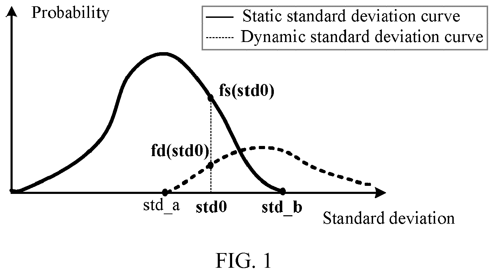

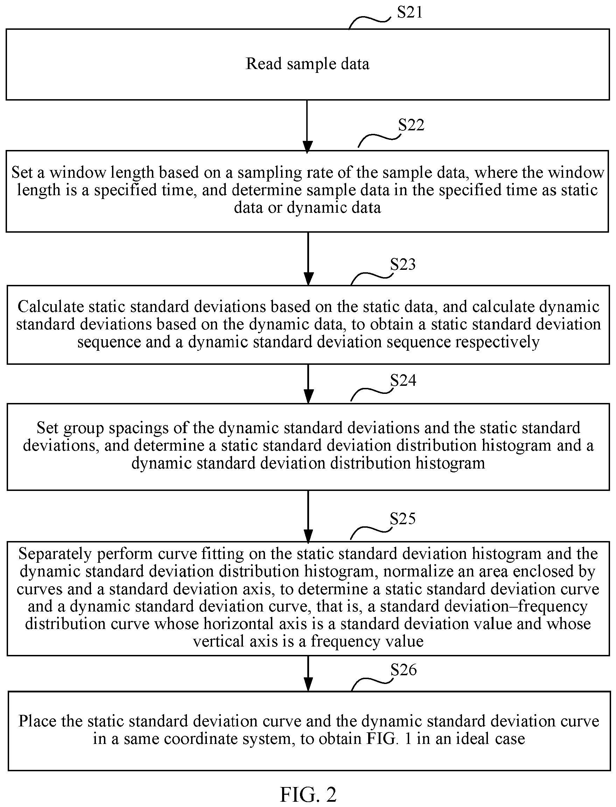

In this embodiment of the present invention, a static standard deviation curve and a dynamic standard deviation curve shown in FIG. 1 are obtained through fitting, by using any axis as an example. A specific process is shown in FIG. 2:

Step S21: Read sample data.
Step S22: Set a window length based on a sampling rate of the sample data, where the window length is a specified time, and determine sample data in the specified time as static data or dynamic data.
Step S23: Calculate static standard deviations based on the static data, and calculate dynamic standard deviations based on the dynamic data, to obtain a static standard deviation sequence and a dynamic standard deviation sequence respectively.
Step S24: Set group spacings of the dynamic standard deviations and the static standard deviations, and determine a static standard deviation distribution histogram and a dynamic standard deviation distribution histogram.

For example, it is assumed that values of the dynamic standard deviations and the static standard deviations range from 0 to 100, group spacings are set by using 5 as a step, and then a plurality of groups, 0-4, 5-9, 10-14, ..., 96-100 are obtained through division. In this embodiment of the present invention, division of the group spacings may be determined as required. This is not limited in the present invention.

Step S25: Separately perform curve fitting on the static standard deviation histogram and the dynamic standard deviation distribution histogram, normalize an area enclosed by curves and a standard deviation (standard deviation, STD) axis, to determine a static standard deviation curve and a dynamic standard deviation curve, that is, a standard deviation-frequency distribution curve whose horizontal axis is a standard deviation value and whose vertical axis is a frequency value.

Specifically, the normalization may be performed by using the following method. An area S enclosed by curves and an STD axis is first calculated, where the area enclosed by the curves is solved by using a trapezoidal integration method, and then a frequency obtained after the STDs are normalized is $f'_{std}$ .

$$f'_{std} = f_{std}/S$$

Step S26: Place the static standard deviation curve and the dynamic standard deviation curve in a same coordinate system, to obtain FIG. 1 in an ideal case.

In FIG. 1, according to the Bemouli Distribution Principle, a probability that any standard deviation is static can be calculated. Each of the static standard deviation curve and the dynamic standard deviation curve has two intersection points with a horizontal axis of the coordinate system; in the two intersection points, an intersection point std a has a shorter distance to an origin of the coordinate system, and an intersection point std_b has a longer distance to the origin of the coordinate system; and an intersection point of the static standard deviation curve and the dynamic standard deviation curve is an intersection point std c; and when the standard deviation is a value less than or equal to the intersection point std a, a probability that the standard deviation is static is a corresponding probability value of the standard deviation on the static standard deviation curve, that is, a probability that the standard deviation is static is 100%; when the standard deviation is a value greater than or equal to the intersection point std_b, a probability that the standard deviation is static is 0; and when the standard deviation std0 is a value greater than the point std_a and less than the point std b, a probability that the standard deviation is static is: a ratio of the corresponding probability value fs(std0) of the standard deviation std0 on the static standard deviation curve to a sum of the corresponding probability value fs(std0) of the standard deviation on the static standard deviation curve and a corresponding probability value fs(std0) of the standard deviation std0 on the dynamic standard deviation curve, that is, a probability that std0 is static is:

$$P_{static}(std_0) = \frac{f_s(std_0)}{f_s(std_0) + f_d(std_0)}$$

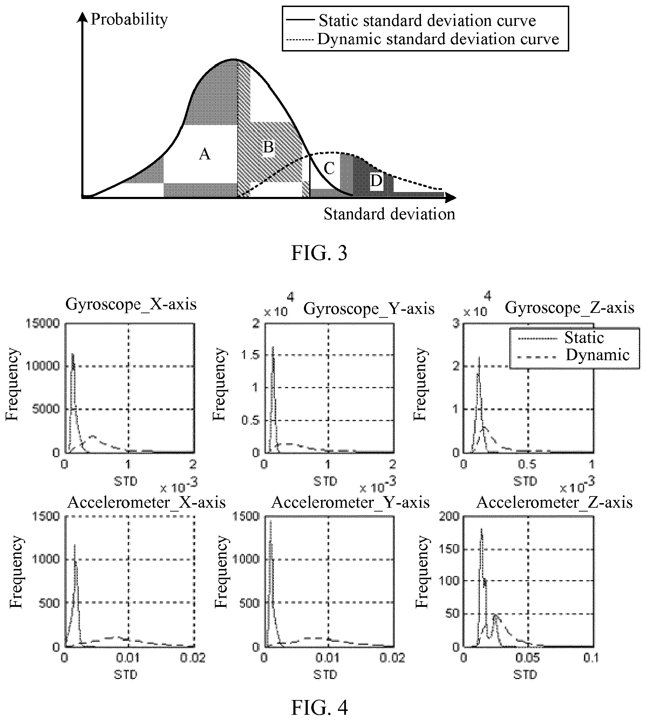

For example, as shown in FIG. 3, a probability that a standard deviation of a region A is static is 100%, probabilities that standard deviations of a region B and a region C are static are calculated by using the foregoing formula, and a probability that a standard deviation of a region D is static is 0.

A reciprocal of the area enclosed by the static standard deviation curve and the dynamic standard deviation curve and the horizontal axis is a weight K of the axis. The determined weight K, a probability that any standard deviation is static, and the standard deviations are determined as a database, and subsequently, the database is used when a status of new data needs to be determined.

In this embodiment of the present invention, FIG. 1 is used for calculating the weight K. It is assumed that a function expression of an overlapping part of the static standard deviation curve and the dynamic standard deviation curve is f(x), a<x<b; and an enclosed area is A, then

$$A = \int_a^b f(x)dx$$

Finally, after normalization is performed, an expression of the weight K is determined as:

$$K_i = \frac{1}{\sum \frac{1}{A_i}} \bullet \frac{1}{A_i}$$

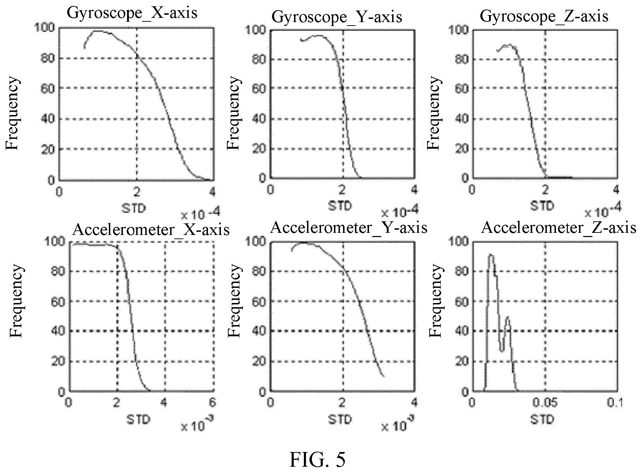

In this embodiment of the present invention, forming of the database (that is, a standard deviation-probability distribution lookup table) is described by using data of six axes that is collected by a vehicle inertial sensor. Sample data is from a plurality of sports car experiments in different application scenarios. During a process of a sports car experiment, a car stopping phenomenon frequently occurs due to traffic jam or intentional reasons, and original output data is collected. The original data includes angular velocities collected by a gyroscope in three directions of an X-axis, a Y-axis, and a Z-axis, and accelerations collected by an accelerometer in the three directions of the X-axis, the Y-axis, and the Z-axis. The collected data is processed according to steps S21 to S26, to obtain static standard deviation curves and dynamic standard deviation curves of axes shown in FIG. 4. A curve of probabilities that a standard deviation of an overlapping part of a static standard deviation curve and a static standard deviation of each axis shown in FIG. 5 are determined as static is determined. In addition, a reciprocal of an area of the overlapping part of axes and a value obtained after normalization are determined, as shown in Table 1 below:

**Table 1**

|  | Gyroscope _X-axis | Gyroscope _Y-axis | Gyroscope _Z-axis | Acceleration_ X-axis | Acceleration_ Y-axis | Acceleration_ Z-axis |
|---|---|---|---|---|---|---|
| Reciprocal of an area | 7.0918 | 10.2050 | 3.0086 | 21.7084 | 15.7428 | 2.4484 |
| K (after normalization) | 0.1178 | 0.1695 | 0.0500 | 0.3606 | 0.2615 | 0.0407 |

The foregoing data is recorded in the database, and when a probability that any standard deviation is static needs to be determined, the data in the database is used for the following calculation: A probability that each standard deviation is static is obtained by performing weighted averaging on a probability that any standard deviation of each of N axes is static and a weight of the axis, that is:

$$P(std0) = \sum_{i=1}^{n} K_i * P_i(std0)$$

n represents a quantity of axes and i represents an $i^{th}$ axis.

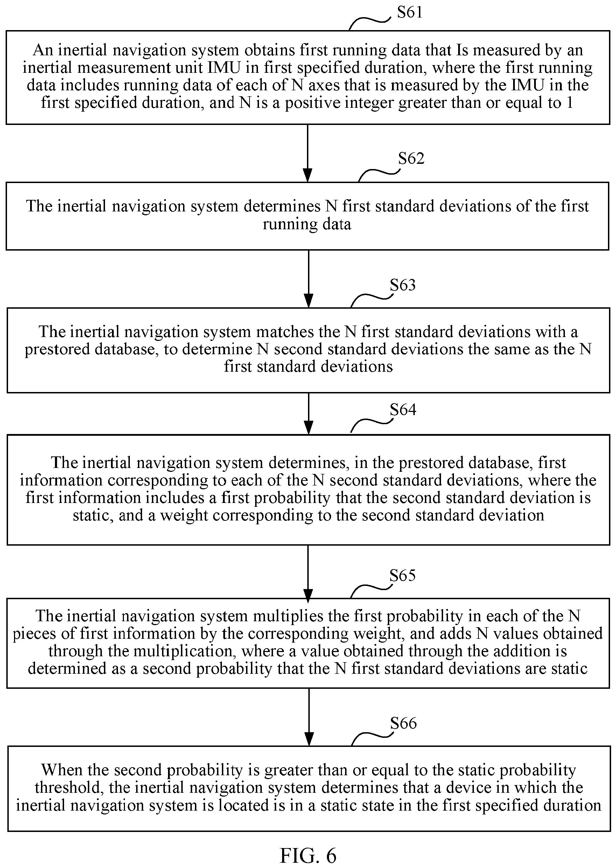

An embodiment of the present invention further provides a static state determining method. As shown in FIG. 6, the method includes the following process:

S61: An inertial navigation system obtains first running data that is measured by an inertial measurement unit IMU in first specified duration, where the first running data includes running data of each of N axes that is measured by the IMU in the first specified duration, and N is a positive integer greater than or equal to 1.

S62: The inertial navigation system determines N first standard deviations of the first running data.

S63: The inertial navigation system matches the N first standard deviations with a prestored database, to determine N second standard deviations the same as the N first standard deviations.

S64: The inertial navigation system determines, in the prestored database, first information corresponding to each of the N second standard deviations, where the first information includes a first probability that the second standard deviation is static, and a weight corresponding to the second standard deviation.

S65: The inertial navigation system multiplies the first probability in each of the N pieces of first information by the corresponding weight, and adds N values obtained through the multiplication, where a value obtained through the addition is determined as a second probability that the N first standard deviations are static.

S66: When the second probability is greater than or equal to the static probability threshold, the inertial navigation system determines that a device in which the inertial navigation system is located is in a static state in the first specified duration.

In this embodiment of the present invention, the inertial navigation system measures, by using the IMU, running data of N axes in the first specified duration; calculates first standard deviations corresponding to the running data of the N axes; queries the database for the calculated N first standard deviations, to determine the N second standard deviations the same as the N first standard deviations; determines, in the database, the first probabilities corresponding to the N second standard deviations respectively, and the weights corresponding to axes on which the N second standard deviations are located; determines, based on the N determined first probabilities and weights corresponding to the N axes, the second probability that the device in which the inertial navigation system is located is static in the first specified duration; compares the second probability with the static probability threshold; and when the second probability is greater than or equal to the static probability threshold, determines that the device in which the inertial navigation system is located is static in the first specified duration. According to the foregoing method, accuracy of determining a static state is improved.

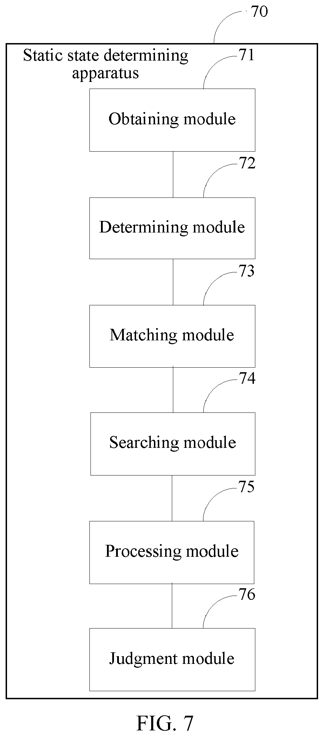

Based on a same inventive concept, an embodiment of the present invention provides a static state determining apparatus 70. As shown in FIG. 7, the apparatus includes:

an obtaining module 71, configured to obtain first running data that is measured by an inertial measurement unit IMU in first specified duration, where the first running data includes running data of each of N axes that is measured by the IMU in the first specified duration, and N is a positive integer greater than or equal to 1;
a determining module 72, configured to determine N first standard deviations of the first running data;
a matching module 73, configured to match the N first standard deviations with a prestored database, to determine N second standard deviations the same as the N first standard deviations;
a searching module 74, configured to determine, in the prestored database, first information corresponding to each of the N second standard deviations, where the first information includes a first probability that the second standard deviation is static, and a weight corresponding to the second standard deviation;
a processing module 75, configured to: multiply the first probability in each of the N pieces of first information by the corresponding weight, and add N values obtained through the multiplication, where a value obtained through the addition is determined as a second probability that the N first standard deviations are static; and
a judgment module 76, configured to: when the second probability is greater than or equal to the static probability threshold, determine that a device in which the inertial navigation system is located is in a static state in the first specified duration.

In this embodiment of the present invention, an inertial navigation system measures, by using the IMU, running data of N axes in the first specified duration; calculates first standard deviations corresponding to the running data of the N axes; queries the database for the calculated N first standard deviations, to determine the N second standard deviations the same as the N first standard deviations; determines, in the database, the first probabilities corresponding to the N second standard deviations respectively, and the weights corresponding to axes on which the N second standard deviations are located; determines, based on the N determined first probabilities and weights corresponding to the N axes, the second probability that the device in which the inertial navigation system is located is static in the first specified duration; compares the second probability with the static probability threshold; and when the second probability is greater than or equal to the static probability threshold, determines that the device in which the inertial navigation system is located is static in the first specified duration. According to the foregoing method, accuracy of determining a static state is improved.

A correspondence between the second standard deviation and the weight is formed through the following process:

determining sample data, measured by the IMU in second specified duration, of any axis;
determining sample data corresponding to each first specified duration in the second specified duration as static data or dynamic data, determining a static standard deviation based on the static data, and determining a dynamic standard deviation based on the dynamic data;
grouping a plurality of determined static standard deviations based on first specified threshold ranges, and determining a quantity of static standard deviations in each first specified threshold range, to obtain a distribution histogram of the static standard deviations; and grouping a plurality of determined dynamic sample standard-deviations based on second specified threshold ranges, and determining a quantity of dynamic sample standard-deviations in each second specified threshold range, to obtain a distribution histogram of the dynamic standard deviations;
separately performing curve fitting on the histogram of the static standard deviations and the distribution histogram of the dynamic standard deviations, and normalizing curves obtained through the fitting, to determine a static standard deviation curve and a dynamic standard deviation curve;
placing the static standard deviation curve and the dynamic standard deviation curve in a same coordinate system, and determining an area of an intersecting part of the static standard deviation curve and the dynamic standard deviation curve; and
determining a reciprocal of the area of the intersecting part as a weight of the plurality of static standard deviations and the plurality of dynamic standard deviations corresponding to any axis.

A correspondence between the second standard deviation and the first probability is formed through the following process, including:

placing the static standard deviation curve and the dynamic standard deviation curve in a same coordinate system, where when the area of the intersecting part of the static. standard deviation curve and the dynamic standard deviation curve is determined, each of the static standard deviation curve and the dynamic standard deviation curve has two intersection points with a horizontal axis of the coordinate system; in the two intersection points, an intersection point a has a shorter distance to an origin of the coordinate system, and an intersection point b has a longer distance to the origin of the coordinate system; and an intersection point of the static standard deviation curve and the dynamic standard deviation curve is an intersection point c; and

when the second standard deviation is a value less than or equal to the intersection point a, a probability that the second standard deviation is static is a corresponding probability value of the second standard deviation on the static standard deviation curve;

when the second data is a value greater than or equal to the intersection point b, a probability that the second standard deviation is static is 0; and

when the second data is a value greater than the point a and less than the point b, a probability that the second standard deviation is static is: a ratio of the corresponding probability value of the second standard deviation on the static standard deviation curve to a sum of the corresponding probability value of the second standard deviation on the static standard deviation curve and a corresponding probability value of the second standard deviation on the dynamic standard deviation curve.

Optionally, N is 6.

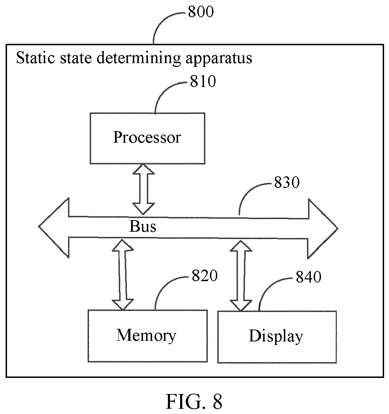

Also disclosed is a static state determining apparatus 800. As shown in FIG. 8, the static state determining apparatus 800 includes a processor 810, a memory 820 connected to the processor, a display 840 that is connected to a bus 830 and that is configured to display a static state, and the memory 820 and the processor 810 are connected to each other by using the bus 830.

The memory 820 is configured to store program code executed by the processor.

The processor 810 is configured to execute the program code stored in the memory to perform any step counting method in the foregoing embodiments, for example, perform the following process:

obtaining first running data that is measured by an inertial measurement unit IMU in first specified duration, where the first running data includes running data of each of N axes that is measured by the IMU in the first specified duration, and N is a positive integer greater than or equal to 1; determining N first standard deviations of the first running data; matching the N first standard deviations with a prcstorcd database, to determine N second standard deviations the same as the N first standard deviations; determining, in the prestored database, first information corresponding to each of the N second standard deviations, where the first information includes a first probability that the second standard deviation is static, and a weight corresponding to the second standard deviation; multiplying the first probability in each of the N pieces of first information by the corresponding weight, and adding N values obtained through the multiplication, where a value obtained through the addition is determined as a second probability that the N first standard deviations are static; and when the second probability is greater than or equal to the static probability threshold, determining that a device in which the inertial navigation system is located is in a static state in the first specified duration.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

## Claims

1. A static state determining method, comprising:

Obtaining (S61), by an inertial navigation system, first running data that is measured by an inertial measurement unit IMU in a first specified duration, wherein the first running data comprises running data of each of N axes that is measured by the IMU in the first specified duration, and N is a positive integer greater than or equal to 1;

Determining (S62), by the inertial navigation system, N first standard deviations of the first running data;

Matching (S63), by the inertial navigation system, the N first standard deviations with a database, to determine N second standard deviations the same as the N first standard deviations;

Determining (S64), by the inertial navigation system in the database, first information corresponding to each of the N second standard deviations, wherein the first information comprises a first probability that the second standard deviation is static, and a weight corresponding to the second standard deviation;

Multiplying (S65), by the inertial navigation system, the first probability in each of the N pieces of first information by the corresponding weight, and adding N values obtained through the multiplication, wherein a value obtained through the addition is a second probability that the N first standard deviations are static; and

if the second probability is greater than or equal to the static probability threshold, determining (S66) that a device in which the inertial navigation system is located is in a static state in the first specified duration;

wherein a correspondence between the second standard deviation and the weight is formed through the following process:

determining, by the inertial navigation system, sample data, measured by the IMU in a second specified duration, of any axis;

determining, by the inertial navigation system, sample data corresponding to each first specified duration in the second specified duration as static data or dynamic data, determining a static standard deviation based on the static data, and determining a dynamic standard deviation based on the dynamic data;

grouping a plurality of determined static standard deviations based on first specified threshold ranges, and determining a quantity of static standard deviations in each first specified threshold range, to obtain a distribution histogram of the static standard deviations; and grouping a plurality of determined dynamic standard deviations based on second specified threshold ranges, and determining a quantity of dynamic standard deviations in each second specified threshold range, to obtain a distribution histogram of the dynamic standard deviations;

separately performing curve fitting on the histogram of the static standard deviations and the distribution histogram of the dynamic standard deviations, and normalizing curves obtained through the fitting, to determine a static standard deviation curve and a dynamic standard deviation curve;

placing the static standard deviation curve and the dynamic standard deviation curve in a same coordinate system, and determining an area of an intersecting part of the static standard deviation curve and the dynamic standard deviation curve, wherein the area of the intersecting part is the overlapping part of the static standard deviation curve and the dynamic standard deviation curve; and

determining a reciprocal of the area of the intersecting part as a weight of the plurality of static standard deviations and the plurality of dynamic standard deviations corresponding to any axis; and

wherein a correspondence between the second standard deviation and the first probability is formed through the following process:

placing the static standard deviation curve and the dynamic standard deviation curve in a same coordinate system, wherein when the area of the intersecting part of the static standard deviation curve and the dynamic standard deviation curve is determined, each of the static standard deviation curve and the dynamic standard deviation curve has two intersection points with a horizontal axis of the coordinate system; in the two intersection points, an intersection point a has a shorter distance to an origin of the coordinate system, and an intersection point b has a longer distance to the origin of the coordinate system; and an intersection point of the static standard deviation curve and the dynamic standard deviation curve is an intersection point c; and

when the second standard deviation is a value less than or equal to the intersection point a, a probability that the second standard deviation is static is a corresponding probability value of the second standard deviation on the static standard deviation curve;

when the second data is a value greater than or equal to the intersection point b, a probability that the second standard deviation is static is 0; and

when the second data is a value greater than the point a and less than the point b, a probability that the second standard deviation is static is: a ratio of the corresponding probability value of the second standard deviation on the static standard deviation curve to a sum of the corresponding probability value of the second standard deviation on the static standard deviation curve and a corresponding probability value of the second standard deviation on the dynamic standard deviation curve.

2. The method according to claim 1, wherein N is 6.

3. A static state determining apparatus, comprising:

an obtaining module (71), configured to obtain first running data that is measured by an inertial measurement unit IMU in a first specified duration, wherein the first running data comprises running data of each of N axes that is measured by the IMU in the first specified duration, and N is a positive integer greater than or equal to 1;
a determining module (72), configured to calculate N first standard deviations of the first running data;
a matching module (73), configured to match the N first standard deviations with a database, to determine N second standard deviations the same as the N first standard deviations;
a searching module (74), configured to determine, in the database, first information corresponding to each of the N second standard deviations, wherein the first information comprises a first probability that the second standard deviation is static, and a weight corresponding to the second standard deviation;
a processing module (75), configured to: multiply the first probability in each of the N pieces of first information by the corresponding weight, and add N values obtained through the multiplication, wherein a value obtained through the addition is a second probability that the N first standard deviations are static; and
a judgment module (76), configured to: determine whether the second probability is greater than the static probability threshold; and if the second probability is greater than or equal to the static probability threshold, determine that a device in which the inertial measurement unit is located is in a static state in the first specified duration;
wherein the searching module is further configured to form a correspondence between the second standard deviation and the weight in the following process:

determining sample data, measured by the IMU in a second specified duration, of any axis;
determining sample data corresponding to each first specified duration in the second specified duration as static data or dynamic data, determining a static standard deviation based on the static data, and determining a dynamic standard deviation based on the dynamic data;
grouping a plurality of determined static standard deviations based on first specified threshold ranges, and determining a quantity of static standard deviations in each first specified threshold range, to obtain a distribution histogram of the static standard deviations; and grouping a plurality of determined dynamic standard deviations based on second specified threshold ranges, and determining a quantity of dynamic standard deviations in each second specified threshold range, to obtain a distribution histogram of the dynamic standard deviations;
separately performing curve fitting on the histogram of the static standard deviations and the distribution histogram of the dynamic standard deviations, and normalizing curves obtained through the fitting, to determine a static standard deviation curve and a dynamic standard deviation curve;
placing the static standard deviation curve and the dynamic standard deviation curve in a same coordinate system, and determining an area of an intersecting part of the static standard deviation curve and the dynamic standard deviation curve; wherein the area of the intersecting part is the overlapping part of the static standard deviation curve and the dynamic standard deviation curve; and
determining a reciprocal of the area of the intersecting part as a weight of the plurality of static standard deviations and the plurality of dynamic standard deviations corresponding to any axis and

wherein the processing module is further configured to form a correspondence between the second standard deviation and the first probability in the following process:

placing the static standard deviation curve and the dynamic standard deviation curve in a same coordinate system, wherein when the area of the intersecting part of the static standard deviation curve and the dynamic standard deviation curve is determined, each of the static standard deviation curve and the dynamic standard deviation curve has two intersection points with a horizontal axis of the coordinate system; in the two intersection points, an intersection point a has a shorter distance to an origin of the coordinate system, and an intersection point b has a longer distance to the origin of the coordinate system; and an intersection point of the static standard deviation curve and the dynamic standard deviation curve is an intersection point c; and

when the second standard deviation is a value less than or equal to the intersection point a, a probability that the second standard deviation is static is a corresponding probability value of the second standard deviation on the static standard deviation curve;

when the second data is a value greater than or equal to the intersection point b, a probability that the second standard deviation is static is 0; and

when the second data is a value greater than the point a and less than the point b, a probability that the second standard deviation is static is: a ratio of the corresponding probability value of the second standard deviation on the static standard deviation curve to a sum of the corresponding probability value of the second standard deviation on the static standard deviation curve and a corresponding probability value of the second standard deviation on the dynamic standard deviation curve.

4. The apparatus according to claim 3, wherein N is 6.


**Patentansprüche**

1. Verfahren zum Bestimmen eines statischen Zustands, das Folgendes umfasst:

Erhalten (S61) von ersten laufenden Daten, die von einer Trägheitsmesseinheit IMU in einer ersten spezifizierten Dauer gemessen werden, durch ein Trägheitsnavigationssystem, wobei die ersten laufenden Daten laufende Daten von jeder von N Achsen umfassen, die von der IMU in der ersten spezifizierten Dauer gemessen werden, und N eine positive Ganzzahl größer als oder gleich 1 ist;

Bestimmen (S62) von N ersten Standardabweichungen der ersten laufenden Daten durch das Trägheitsnavigationssystem;

Abgleichen (S63) der N ersten Standardabweichungen durch das Trägheitsnavigationssystem mit einer Datenbank, um N zweite Standardabweichungen zu bestimmen, die dieselben sind wie die N ersten Standardabweichungen;

Bestimmen (S64) von ersten Informationen, die jeder der N zweiten Standardabweichungen entsprechen, durch das Trägheitsnavigationssystem in der Datenbank, wobei die ersten Informationen eine erste Wahrscheinlichkeit, dass die zweite Standardabweichung statisch ist, und eine Gewichtung, die der zweiten Standardabweichung entspricht, umfassen;

Multiplizieren (S65) der ersten Wahrscheinlichkeit in jedem der N Teile von ersten Informationen mit der entsprechenden Gewichtung und Addieren von N Werten, die durch die Multiplikation erhalten werden, durch das Trägheitsnavigationssystem, wobei ein Wert, der durch die Addition erhalten wird, eine zweite Wahrscheinlichkeit ist, dass die N ersten Standardabweichungen statisch sind; und

wenn die zweite Wahrscheinlichkeit größer als oder gleich dem Statikwahrscheinlichkeitsschwellwert ist, Bestimmen (S66), dass sich eine Vorrichtung, in der sich das Trägheitsnavigationssystem befindet, in der ersten spezifizierten Dauer in einem statischen Zustand befindet;

wobei eine Entsprechung zwischen der zweiten Standardabweichung und der Gewichtung über den folgenden Prozess gebildet wird:

Bestimmen von Probendaten, die von der IMU in einer zweiten spezifizierten Dauer gemessen werden, jeder Achse durch das Trägheitsnavigationssystem;

Bestimmen von Probendaten, die jeder ersten spezifizierten Dauer entsprechen, in der zweiten spezifizierten Dauer als statische Daten oder dynamische Daten, Bestimmen einer statischen Standardabweichung auf Basis der statischen Daten und Bestimmen einer dynamischen Standardabweichung auf Basis der dynamischen Daten durch das Trägheitsnavigationssystem;

Gruppieren einer Vielzahl von bestimmten statischen Standardabweichungen auf Basis von ersten spezifizierten Schwellwertbereichen und Bestimmen einer Menge von statischen Standardabweichungen in jedem ersten spezifizierten Schwellwertbereich, um ein Verteilungshistogramm der statischen Standardabweichungen zu erhalten; und

Gruppieren einer Vielzahl von bestimmten dynamischen Standardabweichungen auf Basis von zweiten spezifizierten Schwellwertbereichen und Bestimmen einer Menge von dynamischen Standardabweichungen in jedem zweiten spezifizierten Schwellwertbereich, um ein Verteilungshistogramm der dynamischen Standardabweichungen zu erhalten;

separates Durchführen einer Kurvenanpassung am Histogramm der statischen Standardabweichungen und am Verteilungshistogramm der dynamischen Standardabweichungen und Normalisieren von Kurven, die durch das Anpassen erhalten werden, um eine statische Standardabweichungskurve und eine dynamische Standardabweichungskurve zu bestimmen;

Platzieren der statischen Standardabweichungskurve und der dynamischen Standardabweichungskurve in ein selbes Koordinatensystem und Bestimmen einer Region eines Überschneidungsteils der statischen Standardabweichungskurve und der dynamischen Standardabweichungskurve, wobei die Region des Überschneidungsteils der überlappende Teil der statischen Standardabweichungskurve und der dynamischen Standardabweichungskurve ist; und

Bestimmen eines Kehrwerts der Region des Überschneidungsteils als eine Gewichtung der Vielzahl von statischen Standardabweichungen und der Vielzahl von dynamischen Standardabweichungen, die einer beliebigen Achse entsprechen; und

wobei eine Entsprechung zwischen der zweiten Standardabweichung und der ersten Wahrscheinlichkeit über den folgenden Prozess gebildet wird:

Platzieren der statischen Standardabweichungskurve und der dynamischen Standardabweichungskurve in ein selbes Koordinatensystem, wobei, wenn die Region des Überschneidungsteils der statischen Standardabweichungskurve und der dynamischen Standardabweichungskurve bestimmt wird, jede der statischen Standardabweichungskurve und der dynamischen Standardabweichungskurve zwei Überschneidungspunkte mit einer horizontalen Achse des Koordinatensystems aufweist, ein Überschneidungspunkt a der zwei Überschneidungspunkte einen kürzeren Abstand zu einem Ursprung des Koordinatensystems aufweist und ein Überschneidungspunkt b einen längeren Abstand zum Ursprung des Koordinatensystems aufweist und ein Überschneidungspunkt der statischen Standardabweichungskurve und der dynamischen Standardabweichungskurve ein Überschneidungspunkt c ist; und

wenn die zweite Standardabweichung ein Wert ist, der kleiner als oder gleich dem Überschneidungspunkt a ist, ist eine Wahrscheinlichkeit, dass die zweite Standardabweichung statisch ist, ein entsprechender Wahrscheinlichkeitswert der zweiten Standardabweichung in der statischen Standardabweichungskurve;

wenn die zweiten Daten ein Wert sind, der größer als oder gleich dem Überschneidungspunkt b ist, ist eine Wahrscheinlichkeit, dass die zweite Standardabweichung statisch ist, 0; und

wenn die zweiten Daten ein Wert sind, der größer als der Punkt a und kleiner als der Punkt b ist, ist eine Wahrscheinlichkeit, dass die zweite Standardabweichung statisch ist, Folgendes: ein Verhältnis des entsprechenden Wahrscheinlichkeitswerts der zweiten Standardabweichung in der statischen Standardabweichungskurve zu einer Summe des entsprechenden Wahrscheinlichkeitswerts der zweiten Standardabweichung in der statischen Standardabweichungskurve und einem entsprechenden Wahrscheinlichkeitswert der zweiten Standardabweichung in der dynamischen Standardabweichungskurve.

2. Verfahren nach Anspruch 1, wobei N 6 ist.

3. Einrichtung zum Bestimmen eines statischen Zustands, die Folgendes umfasst:

ein Erhaltungsmodul (71), das dazu ausgelegt ist, erste laufende Daten, die von einer Trägheitsmesseinheit IMU in einer ersten spezifizierten Dauer gemessen werden, zu erhalten, wobei die ersten laufenden Daten laufende Daten von jeder von N Achsen umfassen, die von der IMU in der ersten spezifizierten Dauer gemessen werden, und N eine positive Ganzzahl größer als oder gleich 1 ist;

ein Bestimmungsmodul (72), das dazu ausgelegt ist, N erste Standardabweichungen der ersten laufenden Daten zu bestimmen;

ein Abgleichungsmodul (73), das dazu ausgelegt ist, die N ersten Standardabweichungen mit einer Datenbank abzugleichen, um N zweite Standardabweichungen zu bestimmen, die dieselben sind wie die N ersten Standardabweichungen;

ein Durchsuchungsmodul (74), das dazu ausgelegt ist, erste Informationen, die jeder der N zweiten Standardabweichungen entsprechen, in der Datenbank zu bestimmen, wobei die ersten Informationen eine erste Wahrscheinlichkeit, dass die zweite Standardabweichung statisch ist, und eine Gewichtung, die der zweiten Standardabweichung entspricht, umfassen;

ein Verarbeitungsmodul (75), das zu Folgendem ausgelegt ist: Multiplizieren der ersten Wahrscheinlichkeit in jedem der N Teile von ersten Informationen mit der entsprechenden Gewichtung und Addieren von N Werten, die durch die Multiplikation erhalten werden, wobei ein Wert, der durch die Addition erhalten wird, eine zweite Wahrscheinlichkeit ist, dass die N ersten Standardabweichungen statisch sind; und

ein Beurteilungsmodul (76), das zu Folgendem ausgelegt ist: Bestimmen, ob die zweite Wahrscheinlichkeit größer ist als der Statikwahrscheinlichkeitsschwellwert; und wenn die zweite Wahrscheinlichkeit größer als oder gleich dem Statikwahrscheinlichkeitsschwellwert ist, Bestimmen, dass sich eine Vorrichtung, in der sich die Trägheitsmesseinheit befindet, in der ersten spezifizierten Dauer in einem statischen Zustand befindet;

wobei das Durchsuchungsmodul ferner dazu ausgelegt ist, eine Entsprechung zwischen der zweiten Standardabweichung und der Gewichtung im folgenden Prozess zu bilden:

Bestimmen von Probendaten, die von der IMU in einer zweiten spezifizierten Dauer gemessen werden, jeder Achse;

Bestimmen von Probendaten, die jeder ersten spezifizierten Dauer entsprechen, in der zweiten spezifizierten Dauer als statische Daten oder dynamische Daten, Bestimmen einer statischen Standardabweichung auf Basis der statischen Daten und Bestimmen einer dynamischen Standardabweichung auf Basis der dynamischen Daten;

Gruppieren einer Vielzahl von bestimmten statischen Standardabweichungen auf Basis von ersten spezifizierten Schwellwertbereichen und Bestimmen einer Menge von statischen Standardabweichungen in jedem ersten spezifizierten Schwellwertbereich, um ein Verteilungshistogramm der statischen Standardabweichungen zu erhalten; und

Gruppieren einer Vielzahl von bestimmten dynamischen Standardabweichungen auf Basis von zweiten spezifizierten Schwellwertbereichen und Bestimmen einer Menge von dynamischen Standardabweichungen in jedem zweiten spezifizierten Schwellwertbereich, um ein Verteilungshistogramm der dynamischen Standardabweichungen zu erhalten;

separates Durchführen einer Kurvenanpassung am Histogramm der statischen Standardabweichungen und am Verteilungshistogramm der dynamischen Standardabweichungen und Normalisieren von Kurven, die durch das Anpassen erhalten werden, um eine statische Standardabweichungskurve und eine dynamische Standardabweichungskurve zu bestimmen;

Platzieren der statischen Standardabweichungskurve und der dynamischen Standardabweichungskurve in ein selbes Koordinatensystem und Bestimmen einer Region eines Überschneidungsteils der statischen Standardabweichungskurve und der dynamischen Standardabweichungskurve; wobei die Region des Überschneidungsteils der überlappende Teil der statischen Standardabweichungskurve und der dynamischen Standardabweichungskurve ist; und

Bestimmen eines Kehrwerts der Region des Überschneidungsteils als eine Gewichtung der Vielzahl von statischen Standardabweichungen und der Vielzahl von dynamischen Standardabweichungen, die einer beliebigen Achse entsprechen; und

wobei das Verarbeitungsmodul ferner dazu ausgelegt ist, eine Entsprechung zwischen der zweiten Standardabweichung und der ersten Wahrscheinlichkeit im folgenden Prozess zu bilden:

Platzieren der statischen Standardabweichungskurve und der dynamischen Standardabweichungskurve in ein selbes Koordinatensystem, wobei, wenn die Region des Überschneidungsteils der statischen Standardabweichungskurve und der dynamischen Standardabweichungskurve bestimmt wird, jede der statischen Standardabweichungskurve und der dynamischen Standardabweichungskurve zwei Überschneidungspunkte mit einer horizontalen Achse des Koordinatensystems aufweist, ein Überschneidungspunkt a der zwei Überschneidungspunkte einen kürzeren Abstand zu einem Ursprung des Koordinatensystems aufweist und ein Überschneidungspunkt b einen längeren Abstand zum Ursprung des Koordinatensystems aufweist und ein Überschneidungspunkt der statischen Standardabweichungskurve und der dynamischen Standardabweichungskurve ein Überschneidungspunkt c ist; und

wenn die zweite Standardabweichung ein Wert ist, der kleiner als oder gleich dem Überschneidungspunkt a ist, ist eine Wahrscheinlichkeit, dass die zweite Standardabweichung statisch ist, ein entsprechender Wahrscheinlichkeitswert der zweiten Standardabweichung in der statischen Standardabweichungskurve;

wenn die zweiten Daten ein Wert sind, der größer als oder gleich dem Überschneidungspunkt b ist, ist eine Wahrscheinlichkeit, dass die zweite Standardabweichung statisch ist, 0; und

wenn die zweiten Daten ein Wert sind, der größer als der Punkt a und kleiner als der Punkt b ist, ist eine Wahrscheinlichkeit, dass die zweite Standardabweichung statisch ist, Folgendes: ein Verhältnis des entsprechenden Wahrscheinlichkeitswerts der zweiten Standardabweichung in der statischen Standardabweichungskurve zu einer Summe des entsprechenden Wahrscheinlichkeitswerts der zweiten Standardabweichung in der statischen Standardabweichungskurve und einem entsprechenden Wahrscheinlichkeitswert der zweiten Standardabweichung in der dynamischen Standardabweichungskurve.

4. Einrichtung nach Anspruch 3, wobei N 6 ist.

**Revendications**

1. Procédé de détermination d'état statique, comprenant les étapes consistant à :

obtenir (S61), par un système de navigation inertielle, des premières données de parcours qui sont mesurées par une unité de mesure inertielle, IMU, au cours d'une première durée spécifiée, les premières données de parcours comprenant des données de parcours de chacun de N axes qui sont mesurées par l'IMU au cours de la première durée spécifiée, et N étant un entier positif supérieur ou égal à 1 :

déterminer (S62), par le système de navigation inertielle, N premiers écarts types des premières données de parcours ;

faire correspondre (S63), par le système de navigation inertielle, les N premiers écarts types à une base de données, pour déterminer N deuxièmes écarts types qui sont identiques aux N premiers écarts types ;

déterminer (S64), par le système de navigation inertielle dans la base de données, des premières informations correspondant à chacun des N deuxièmes écarts types, les premières informations comprenant une première probabilité que le deuxième écart type soit statique, et un poids correspondant au deuxième écart type ;

multiplier (S65), par le système de navigation inertielle, la première probabilité dans chacun des N éléments de premières informations par le poids correspondant, et ajouter N valeurs obtenues par la multiplication, une valeur obtenue par l'ajout étant une deuxième probabilité que les N premiers écarts types soient statiques ; et

si la deuxième probabilité est supérieure ou égale au seuil de probabilité statique, déterminer (S66) qu'un dispositif dans lequel le système de navigation inertielle est situé se trouve dans un état statique au cours de la première durée spécifiée ;

dans lequel une correspondance entre le deuxième écart type et le poids est formée par le processus suivant consistant à :

déterminer, par le système de navigation inertielle, des données d'échantillon, mesurées par l'IMU au cours d'une deuxième durée spécifiée, de n'importe quel axe ;

déterminer, par le système de navigation inertielle, des données d'échantillon correspondant à chaque première durée spécifiée au cours de la deuxième durée spécifiée en tant que données statiques ou données dynamiques, déterminer un écart type statique d'après les données statiques et déterminer un écart type dynamique d'après les données dynamiques ;

regrouper une pluralité d'écarts types statiques déterminés d'après des premières plages de seuils spécifiées, et déterminer une quantité d'écarts types statiques dans chaque première plage de seuils spécifiée, pour obtenir un histogramme de distribution des écarts types statiques ; et regrouper une pluralité d'écarts types dynamiques déterminés d'après des deuxièmes plages de seuils spécifiées, et déterminer une quantité d'écarts types dynamiques dans chaque deuxième plage de seuils spécifiée, pour obtenir un histogramme de distribution des écarts types dynamiques ;

effectuer séparément un ajustement de courbe sur l'histogramme des écarts types statiques et l'histogramme de distribution des écarts types dynamiques, et normaliser les courbes obtenues par cet ajustement, pour déterminer une courbe d'écart type statique et une courbe d'écart type dynamique ;

placer la courbe d'écart type statique et la courbe d'écart type dynamique dans un même système de coordonnées, et déterminer une superficie d'une partie d'intersection de la courbe d'écart type statique et de la courbe d'écart type dynamique, la superficie de la partie d'intersection étant la partie en chevauchement de la courbe d'écart type statique et de la courbe d'écart type dynamique ; et

déterminer une valeur inverse de la superficie de la partie d'intersection comme poids de la pluralité d'écarts types statiques et de la pluralité d'écarts types dynamiques correspondant à n'importe quel axe ; et

dans lequel une correspondance entre le deuxième écart type et la première probabilité est formée par le processus suivant consistant à :

placer la courbe d'écart type statique et la courbe d'écart type dynamique dans un même système de coordonnées, dans lequel lorsque la superficie de la partie d'intersection de la courbe d'écart type statique et de la courbe d'écart type dynamique est déterminée, chacune de la courbe d'écart type statique et de la courbe d'écart type dynamique a deux points d'intersection avec un axe horizontal du système de coordonnées ; parmi les deux points d'intersection, un point d'intersection présente une distance à une origine du système de coordonnées qui est plus courte, et un point d'intersection b présente une distance à l'origine du système de coordonnées qui est plus longue ; et un point d'intersection de la courbe d'écart type statique et de la courbe d'écart type dynamique est un point d'intersection c ; et

lorsque le deuxième écart type est une valeur inférieure ou égale au point d'intersection a, une probabilité que le deuxième écart type soit statique est une valeur de probabilité correspondante du deuxième écart type sur la courbe d'écart type statique ;

lorsque les deuxièmes données sont une valeur supérieure ou égale au point d'intersection b, une probabilité que le deuxième écart type soit statique est égale à 0 ; et

lorsque les deuxièmes données sont une valeur supérieure au point a et inférieure au point b, une probabilité que le deuxième écart type soit statique est : un rapport de la valeur de probabilité correspondante du deuxième écart type sur la courbe d'écart type statique à une somme de la valeur de probabilité correspondante du deuxième écart type sur la courbe d'écart type statique et d'une valeur de probabilité correspondante du deuxième écart type sur la courbe d'écart type dynamique.

2. Procédé selon la revendication 1, dans lequel N est égal à 6.

3. Appareil de détermination d'état statique, comprenant :

un module d'obtention (71), configuré pour obtenir des premières données de parcours qui sont mesurées par une unité de mesure inertielle, IMU, au cours d'une première durée spécifiée, les premières données de parcours comprenant des données de parcours de chacun de N axes qui sont mesurées par l'IMU au cours de la première durée spécifiée, et N étant un entier positif supérieur ou égal à 1 :

un module de détermination (72), configuré pour calculer N premiers écarts types des premières données de parcours ;

un module de mise en correspondance (73), configuré pour faire correspondre les N premiers écarts types à une base de données, pour déterminer N deuxièmes écarts types qui sont identiques aux N premiers écarts types ;

un module de recherche (74), configuré pour déterminer, dans la base de données, des premières informations correspondant à chacun des N deuxièmes écarts types, les premières informations comprenant une première probabilité que le deuxième écart type soit statique, et un poids correspondant au deuxième écart type ;

un module de traitement (75), configuré pour : multiplier la première probabilité dans chacun des N éléments de premières informations par le poids correspondant, et ajouter N valeurs obtenues par la multiplication, une valeur obtenue par l'ajout étant une deuxième probabilité que les N premiers écarts types soient statiques ; et

un module d'estimation (76), configuré pour : déterminer si la deuxième probabilité est supérieure au seuil de probabilité statique ; et si la deuxième probabilité est supérieure ou égale au seuil de probabilité statique, déterminer qu'un dispositif dans lequel l'unité de mesure inertielle est située se trouve dans un état statique au cours de la première durée spécifiée ;

dans lequel le module de recherche est également configuré pour former une correspondance entre le deuxième écart type et le poids par le processus suivant consistant à :

déterminer des données d'échantillon, mesurées par l'IMU au cours d'une deuxième durée spécifiée, de n'importe quel axe ;

déterminer des données d'échantillon correspondant à chaque première durée spécifiée au cours de la deuxième durée spécifiée en tant que données statiques ou données dynamiques, déterminer un écart type statique d'après les données statiques et déterminer un écart type dynamique d'après les données dynamiques ;

regrouper une pluralité d'écarts types statiques déterminés d'après des premières plages de seuils spécifiées, et déterminer une quantité d'écarts types statiques dans chaque première plage de seuils spécifiée, pour obtenir un histogramme de distribution des écarts types statiques ; et regrouper une pluralité d'écarts types dynamiques déterminés d'après des deuxièmes plages de seuils spécifiées, et déterminer une quantité d'écarts types dynamiques dans chaque deuxième plage de seuils spécifiée, pour obtenir un histogramme de distribution des écarts types dynamiques ;

effectuer séparément un ajustement de courbe sur l'histogramme des écarts types statiques et l'histogramme de distribution des écarts types dynamiques, et normaliser les courbes obtenues par l'ajustement, pour déterminer une courbe d'écart type statique et une courbe d'écart type dynamique ;

placer la courbe d'écart type statique et la courbe d'écart type dynamique dans un même système de coordonnées, et déterminer une superficie d'une partie d'intersection de la courbe d'écart type statique et de la courbe d'écart type dynamique ; la superficie de la partie d'intersection étant la partie en chevauchement de la courbe d'écart type statique et de la courbe d'écart type dynamique ; et

déterminer une valeur inverse de la superficie de la partie d'intersection comme poids de la pluralité d'écarts types statiques et de la pluralité d'écarts types dynamiques correspondant à n'importe quel axe, et

dans lequel le module de traitement est également configuré pour former une correspondance entre le deuxième écart type et la première probabilité par le processus suivant consistant à :

placer la courbe d'écart type statique et la courbe d'écart type dynamique dans un même système de coordonnées, dans lequel lorsque la superficie de la partie d'intersection de la courbe d'écart type statique et de la courbe d'écart type dynamique est déterminée, chacune de la courbe d'écart type statique et de la courbe d'écart type dynamique a deux points d'intersection avec un axe horizontal du système de coordonnées ; parmi les deux points d'intersection, un point d'intersection a présente une distance à une origine du système de coordonnées qui est plus courte, et un point d'intersection b présente une distance à l'origine du système de coordonnées qui est plus longue ; et un point d'intersection de la courbe d'écart type statique et de la courbe d'écart type dynamique est un point d'intersection c ; et

lorsque le deuxième écart type est une valeur inférieure ou égale au point d'intersection a, une probabilité que le deuxième écart type soit statique est une valeur de probabilité correspondante du deuxième écart type sur la courbe d'écart type statique ;

lorsque les deuxièmes données sont une valeur supérieure ou égale au point d'intersection b, une probabilité que le deuxième écart type soit statique est égale à 0 ; et

lorsque les deuxièmes données sont une valeur supérieure au point a et inférieure au point b, une probabilité que le deuxième écart type soit statique est : un rapport de la valeur de probabilité correspondante du deuxième écart type sur la courbe d'écart type statique à une somme de la valeur de probabilité correspondante du deuxième écart type sur la courbe d'écart type statique et d'une valeur de probabilité correspondante du deuxième écart type sur la courbe d'écart type dynamique.

4. Appareil selon la revendication 3, dans lequel N est égal à 6.

FIG. 1

```
                                            S21
┌─────────────────────────────────────────────────────┐
│                                                       │
│                   Read sample data                    │
│                                                       │
└─────────────────────────────────────────────────────┘
                            │
                            ▼                S22
┌─────────────────────────────────────────────────────┐
│ Set a window length based on a sampling rate of the   │
│ sample data, where the window length is a specified    │
│ time, and determine sample data in the specified time  │
│              as static data or dynamic data            │
└─────────────────────────────────────────────────────┘
                            │
                            ▼                S23
┌─────────────────────────────────────────────────────┐
│ Calculate static standard deviations based on the      │
│ static data, and calculate dynamic standard deviations │
│ based on the dynamic data, to obtain a static standard │
│ deviation sequence and a dynamic standard deviation    │
│                 sequence respectively                  │
└─────────────────────────────────────────────────────┘
                            │
                            ▼                S24
┌─────────────────────────────────────────────────────┐
│ Set group spacings of the dynamic standard deviations  │
│ and the static standard deviations, and determine a    │
│ static standard deviation distribution histogram and a │
│    dynamic standard deviation distribution histogram   │
└─────────────────────────────────────────────────────┘
                            │
                            ▼                S25
┌─────────────────────────────────────────────────────┐
│ Separately perform curve fitting on the static standard│
│ deviation histogram and the dynamic standard deviation │
│ distribution histogram, normalize an area enclosed by  │
│ curves and a standard deviation axis, to determine a   │
│ static standard deviation curve and a dynamic standard │
│ deviation curve, that is, a standard deviation–frequency│
│ distribution curve whose horizontal axis is a standard │
│ deviation value and whose vertical axis is a frequency │
│                         value                          │
└─────────────────────────────────────────────────────┘
                            │
                            ▼                S26
┌─────────────────────────────────────────────────────┐
│ Place the static standard deviation curve and the      │
│ dynamic standard deviation curve in a same coordinate  │
│      system, to obtain FIG. 1 in an ideal case         │
└─────────────────────────────────────────────────────┘
```

FIG. 2

FIG. 3

FIG. 4

FIG. 5

S61

An inertial navigation system obtains first running data that Is measured by an inertial measurement unit IMU in first specified duration, where the first running data includes running data of each of N axes that is measured by the IMU in the first specified duration, and N is a positive integer greater than or equal to 1

S62

The inertial navigation system determines N first standard deviations of the first running data

S63

The inertial navigation system matches the N first standard deviations with a prestored database, to determine N second standard deviations the same as the N first standard deviations

S64

The inertial navigation system determines, in the prestored database, first information corresponding to each of the N second standard deviations, where the first information includes a first probability that the second standard deviation is static, and a weight corresponding to the second standard deviation

S65

The inertial navigation system multiplies the first probability in each of the N pieces of first information by the corresponding weight, and adds N values obtained through the multiplication, where a value obtained through the addition is determined as a second probability that the N first standard deviations are static

S66

When the second probability is greater than or equal to the static probability threshold, the inertial navigation system determines that a device in which the inertial navigation system is located is in a static state in the first specified duration

FIG. 6

70

Static state determining apparatus 71

Obtaining module

72

Determining module

73

Matching module

74

Searching module

75

Processing module

76

Judgment module

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Probabilistic stand still detection using foot mounted IMU. **JONAS CALLMER et al.** Information Fusion, 2010, 13th Conference. IEEE, 26 July 2010, 1-7